# FASCICULE DE BREVET EUROPEEN

(11) **EP 1 144 223 B1**
(45) Date de publication et mention de la délivrance du brevet: **26.03.2003**
(21) Numéro de dépôt: 00990040.8
(22) Date de dépôt: 08.12.2000
(51) Int. Cl.: B60R 13/00

(54) **ELEMENT D'HABILLAGE INTERIEUR DE VEHICULE ET SON PROCEDE DE FABRICATION**
INNENVERKLEIDIGUNGSTEIL EINES KRAFTFAHRZEUGES UND SEIN HERSTELLUNGSVERFAHREN
INTERIOR COVERING ELEMENT FOR A VEHICLE AND METHOD FOR PRODUCING THE SAME

(30) Priorité: 09.12.1999 FR 9915548
(43) Date de publication de la demande: 17.10.2001
(73) Titulaire: SAI AUTOMOTIVE ALLIBERT INDUSTRIE, 92748 Nanterre (FR)
(72) Inventeur: MARCOVECCHIO, Dominique, F-92600 Asnieres-sur-Seine (FR)
(74) Mandataire: Lerner, François
(86) Numéro de dépôt international: FR0003452
(87) Numéro de publication internationale: WO01042052

(56) Documents cités:
- EP-A- 0 446 411
- WO-A-98/18657
- US-A- 5 629 085
- US-A- 5 932 331

## Description

L'invention concerne un élément d'habillage intérieur de véhicule, ainsi que son procédé de fabrication.

De tels éléments sont montés sur l'intérieur de la carrosserie du véhicule. Ils comprennent usuellement un insert rigide conférant à l'élément sa forme et une feuille de revêtement recouvrant l'insert rigide pour constituer la surface d'aspect du panneau. Afin de conférer à ces éléments un toucher plus souple, une couche de mousse est interposée entre l'insert rigide et la feuille de revêtement.

Toutefois, si de multiples procédés (injection, compression, thermo-compression,...) et types de mousse (en polyoléfine, en polyuréthane,...) ont été proposés pour réaliser de tels éléments, aucun n'a réellement apporté satisfaction dans le cas d'un élément présentant des conformations marquées telles qu'un accoudoir et devant être recouvert par un textile ou analogue (par exemple, matériau non tissé à base de fibre). On définit ici le textile (en particulier tissu, velours, tricot, non-tissé,...) par opposition à une peau, qu'elle soit naturelle (cuir) ou synthétique (PVC, polyoléfine,...).

Concernant le choix du type de mousse, une mousse possédant essentiellement des cellules ouvertes, même dans le cas d'une mousse comprenant essentiellement du polyuréthane, nécessite, lorsqu'elle est utilisée en couche de plus de quelques dixièmes de millimètre d'épaisseur, d'être tendue pour éviter la formation de plis. Ceci amoindrit considérablement son pouvoir de compressibilité, en particulier dans les parties convexes où il est quasiment nul.

Quant à une mousse à cellules essentiellement fermées, même dans le cas d'une mousse comprenant essentiellement un matériau thermoplastique polyoléfinique, elle ne permet généralement pas, lorsque la feuille de revêtement est en textile ou analogue, d'obtenir une pièce pleinement satisfaisante. En effet, la pièce obtenue possède alors des caractéristiques acoustiques peu flatteuses (pièce bruyante et d'une sonorité cartonneuse) et présente un toucher bien souvent jugé peu agréable (sensation de rugosité, d'abrasion) et trop dur pour certaines applications (panneau de porte notamment).

A toutes fins utiles, on précise qu'une mousse présentant des cellules fermées renferme de l'air à l'intérieur de ses cellules. L'air est alors comprimé lorsque que l'on écrase la mousse. Par contre une mousse à cellules ouvertes laisse l'air s'échapper lorsqu'elle est comprimée.

EP-A-0 446 411 décrit un élément d'habillage dont la couche de mousse se subdivise en une première sous-couche souple en polyoléfine (TPO) ou en polychlorure de vinyle (PVC) et une deuxième sous-couche en polyuréthanne haute-densité (PU), la première sous-couche étant disposée entre la feuille de revêtement et la deuxième sous-couche, tandis que la deuxième sous-couche est disposée entre la première sous-couche et l'insert.

La deuxième sous-couche de mousse forme une barrière thermique évitant la détérioration de la première sous-couche de mousse et permettant ainsi de mettre de mettre en forme ladite première sous-couche sans formation de plis.

Toutefois, cette réalisation n'est pas complètement satisfaisante, dans la mesure où les défauts précités concernant la qualité perçue du produit en relation avec le toucher et la réponse acoustique du produit restent sensibles.

L'invention vise à améliorer la qualité de l'élément d'habillage en palliant ou du moins en atténuant très nettement les problèmes précités, tout en permettant une mise oeuvre aisée et peu coûteuse.

Pour ce faire, l'invention propose que :
- la première sous-couche présente principalement des cellules ouvertes, et
- la deuxième sous-couche présente principalement des cellules fermées et soit réalisée essentiellement en matériau(x) thermoplastique(s) polyoléfinique(s).

La deuxième sous-couche de mousse assure ainsi une certaine souplesse au toucher sur l'ensemble de la pièce, même si cette souplesse est limitée. En outre, elle procure à l'élément d'habillage un bruit plus flatteur que dans le cas où la seconde sous-couche est en polyuréthanne haute densité.

Selon une caractéristique complémentaire, l'invention propose que la première sous-couche de mousse soit réalisée essentiellement en polyuréthane.

La mousse en polyuréthane à cellules ouvertes de la première sous-couche améliore la sensation de souplesse au toucher sur l'essentiel de la pièce, donne plus de liberté au textile, notamment que de la mousse polyoléfinique (polypropylène ou polyéthylène), de sorte qu'elle procure une sensation de plus grande douceur au toucher et isole phoniquement la pièce, lui conférant ainsi un bruit plus mat, même lorsque son épaisseur est relativement faible.

Un compromis intéressant entre isolation phonique, risque de formation de plis et coût de l'élément d'habillage est obtenu pour une épaisseur de la première sous-couche de mousse comprise entre 1 millimètre et 3 millimètres.

L'invention concerne en outre un procédé pour réaliser un élément d'habillage intérieur de véhicule.

EP-A-0 446 411 décrit certes un procédé comprenant les étapes suivantes :
a) réaliser un complexe comprenant une feuille de revêtement, une première sous-couche de mousse présentant principalement des cellules ouvertes et une deuxième sous-couche de mousse présentant principalement des cellules fermées,
b) disposer dans un moule la première sous-couche de mousse, entre la feuille de revêtement et la deuxième sous-couche de mousse,
c) mettre en forme la feuille de revêtement, la première et la deuxième sous-couches de mousse par fermeture du moule,
d) lier la feuille de revêtement, la première et la deuxième sous-couches de mousse avec un insert rigide.

Ainsi, en une seule opération d'une part on met en forme la feuille de revêtement, la première et la deuxième sous-couches de mousse et d'autre part on les lie à l'insert rigide.

Toutefois, ce procédé pose les problèmes précités en relation avec l'élément d'habillage. Pour y remédier, l'invention propose que l'on réalise à l'étape a) un complexe dont la deuxième sous-couche est essentiellement en matériau(x) thermoplastique(s) polyoléfinique(s).

Cette solution présente les avantages précités en relation avec l'élément d'habillage.

De manière complémentaire, l'invention propose que pour réaliser les étapes b), c) et d), on réalise successivement les étapes suivantes :
- réaliser préalablement l'insert,
- disposer l'insert dans le moule en regard de la deuxième sous-couche de mousse,
- presser la feuille de revêtement, la première sous-couche de mousse, la deuxième sous-couche de mousse et l'insert, afin de les mettre tous en forme et les lier ensemble.

En réalisant l'insert au préalable, le risque de dégrader les qualités de la deuxième sous-couche de mousse est réduit.

Afin d'améliorer encore l'aspect de l'élément réalisé, l'invention propose que l'on mette l'insert sensiblement à sa forme définitive avant de le disposer dans le moule.

De cette manière, seul l'ensemble constitué par la feuille de revêtement, la première et la deuxième sous-couches de mousse doit être mis en forme dans le moule. Ainsi, l'épaisseur à mettre en forme est réduite par rapport à l'épaisseur de l'élément entier. Par conséquent, les sous-couches de mousse et la feuille de revêtement soumises à de moindres contraintes risquent moins de présenter des défauts d'aspect.

Selon une autre caractéristique complémentaire de l'invention, pour réaliser les étapes c) et d), on réalise successivement les étapes suivantes :
- disposer le complexe dans le moule,
- fermer au moins partiellement le moule,
- injecter de la matière plastique sous basse pression, en regard de la deuxième sous-couche de mousse, par l'intermédiaire d'une pluralité de buses.

Ainsi, on réalise l'élément en une opération de moins, puisque la réalisation de l'insert, la mise en forme de la feuille de revêtement, de la première et de la deuxième sous-couches de mousse, ainsi que leur liaison à l'insert s'effectue en une seule étape.

L'injection sous-basse pression permet de réduire le risque de défaut d'aspect sur l'élément réalisé et en particulier de détérioration de la sous-couche de mousse présentant principalement des cellules fermées, en l'exposant à des contraintes moins élevées. L'injection par une pluralité de buses permet d'abaisser la température d'injection de la matière et de raccourcir les longueurs d'écoulement. Ceci permet d'améliorer l'homogénéité des contraintes thermiques et mécaniques subies par le complexe et ainsi réduire le risque que les lignes de flux soient visibles.

Afin d'améliorer encore les qualités d'aspect de l'élément réalisé et la liaison entre l'insert et la deuxième sous-couche de mousse, l'invention propose que préalablement à l'étape c), on expose la deuxième sous-couche de mousse à une source de chaleur pour la ramollir.

Le chauffage facilite la mise en forme de la deuxième sous-couche de mousse, réduit le risque de provoquer des plis et améliore la liaison chimique avec l'insert, y compris dans le cas où une couche de colle est disposée entre l'insert et la deuxième sous-couche de mousse.

Pour faciliter la réalisation de l'élément et améliorer la liaison entre la feuille de revêtement, la première et la deuxième sous-couches de mousse, l'invention propose que préalablement à l'étape b), on lie ensemble la feuille de revêtement, la première et la deuxième sous-couches de mousse.

Le complexe constitué par l'ensemble assemblé de la feuille de revêtement, de la première et de la deuxième sous-couches de mousse est plus aisé à positionner dans le moule que dans le cas où ces couches n'auraient pas été liées entre elles au préalable. De plus, la liaison entre ces couches peut être mieux contrôlée lorsqu'elle est réalisée au préalable que lorsqu'elle est réalisée dans le moule en présence de l'insert.

L'invention va apparaître encore plus clairement dans la description qui va suivre, faite en référence aux dessins annexés dans lesquels :
- les figures 1 à 3 sont des vues en coupe illustrant trois étapes d'un procédé conforme à l'invention,
- la figure 4 est une vue en coupe d'un élément d'habillage intérieur de véhicule obtenu par la mise en oeuvre du procédé décrit aux figures 1 à 3,
- la figure 5 est une vue en coupe d'une variante de procédé.

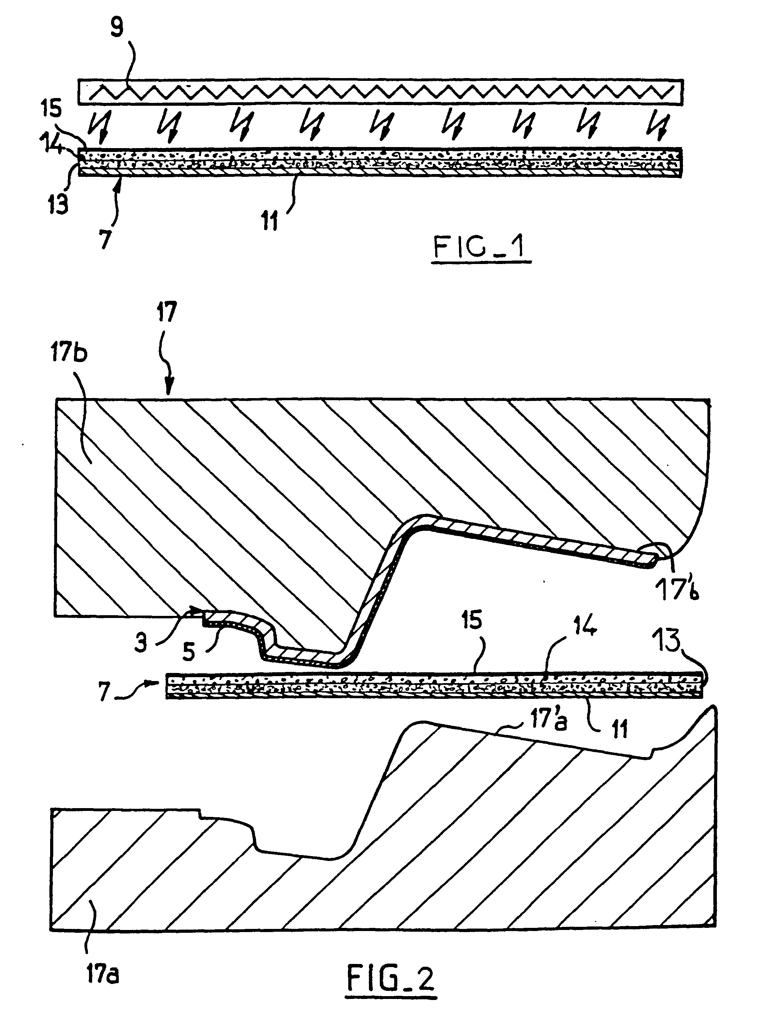

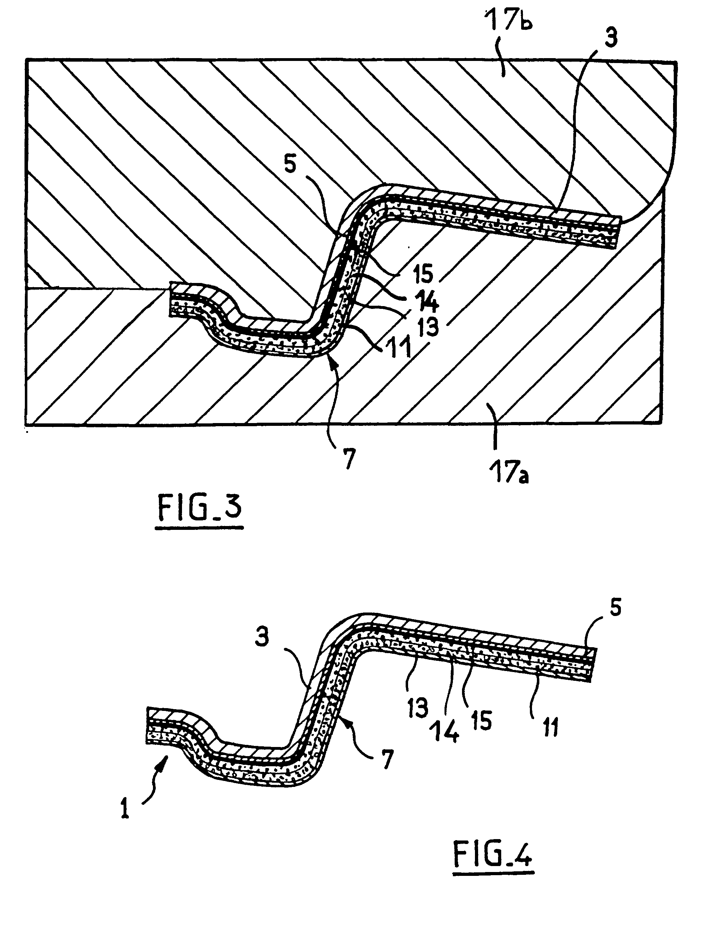

Les figures 1 à 4 décrivent un procédé de réalisation d'un élément d'habillage intérieur de véhicule, en l'espèce, un panneau intérieur de porte, cette pièce étant repérée (schématiquement) dans son ensemble 1 à la figure 4.

Lors d'une première étape, on réalise tout d'abord une feuille revêtement 11 formant couche d'aspect, une première sous-couche de mousse 13, une deuxième sous-couche de mousse 14 et un insert rigide 3, selon des techniques connues.

Tel qu'illustré en particulier à la figure 1, la feuille de revêtement 13 et les deux sous-couches de mousse 14 et 15 sont ici intimement liées entre elles pour former un complexe 7 selon une technique également connue, qui peut notamment consister en un flammage ou en un collage par chauffage d'une colle en poudre disposée entre elles. Le complexe 7 comprend en outre ici une feuille d'accrochage 15 destinée à favoriser l'adhésion entre le complexe 7 et l'insert 3.

La première sous-couche de mousse 13 est interposée entre la feuille de revêtement 11 et la deuxième sous-couche de mousse 14. Elle comprend principalement des cellules ouvertes et est en particulier avantageusement réalisée essentiellement en polyuréthane. Son épaisseur avant flammage ou chauffage est avantageusement comprise entre 1 millimètre et 3 millimètres.

La deuxième sous-couche de mousse 14 comprend essentiellement des cellules fermées et est en particulier avantageusement réalisée essentiellement en matériau(x) thermoplastique(s) polyoléfinique(s), tels que du polyéthylène et du polypropylène. Son épaisseur est avantageusement comprise entre 1 millimètre et 5 millimètres.

La feuille de revêtement 11 est réalisée en matériau textile, non tissé ou analogue.

A la figure 1, le complexe 7 et en particulier la deuxième sous-couche de mousse est chauffée, ici par des moyens 9 à infrarouge environ entre 200°C et 250°C.

Tel qu'illustré à la figure 2, le complexe 7 et l'insert 5 sont ensuite disposés dans un moule d'assemblage 17 comprenant une matrice 17a et un poinçon 17b.

La feuille de revêtement 11 vient en regard d'une surface 17'a, d'une partie du moule, ici de la matrice 17a.

Le complexe 7 peut être disposé sur un cadre pour son transfert vers le moule 17 et/ou pour son maintien (éventuellement sous tension).

L'insert 3 présente ici sa forme définitive. Il s'agit d'un panneau, ou support équivalent ayant une fonction mécanique de rigidification de la pièce finie, autrement de porteur vis-à-vis des autres éléments auxquels il va être lié.

L'insert 3 a pu être obtenu par injection, dans un moule lui ayant conféré sa forme définitive. Il peut en particulier être en matière plastique et plus précisément en matière thermoplastique (polypropylène, par exemple) ou encore en matière composite (par exemple, matière thermoplastique + fibres de bois). Une de ses faces est recouverte ici d'une couche d'adhésif 5, en particulier une couche de colle activable à chaud.

L'insert 3 vient au contact d'une surface 17'b du poinçon 17b, la couche d'adhésif 5 vient en regard de la deuxième sous-couche de mousse 14 et la feuille d'accrochage 15.

Le moule est ensuite fermé, tel qu'illustré à la figure 3. Les différentes couches 11, 13, 14, 15 du complexe et l'insert sont alors pressés les uns contre les autres, ce qui provoque la mise en forme de la feuille de revêtement 11, des sous-couches de mousse 13,14 et de la feuille d'accrochage 15. En outre, le complexe 7, et plus précisément la deuxième sous-couche 14, se trouve lié à l'insert 3 par l'intermédiaire de la feuille d'accrochage 15 et de la couche d'adhésif 5.

Après refroidissement et démoulage, on obtient la pièce 1 représentée à la figure 4.

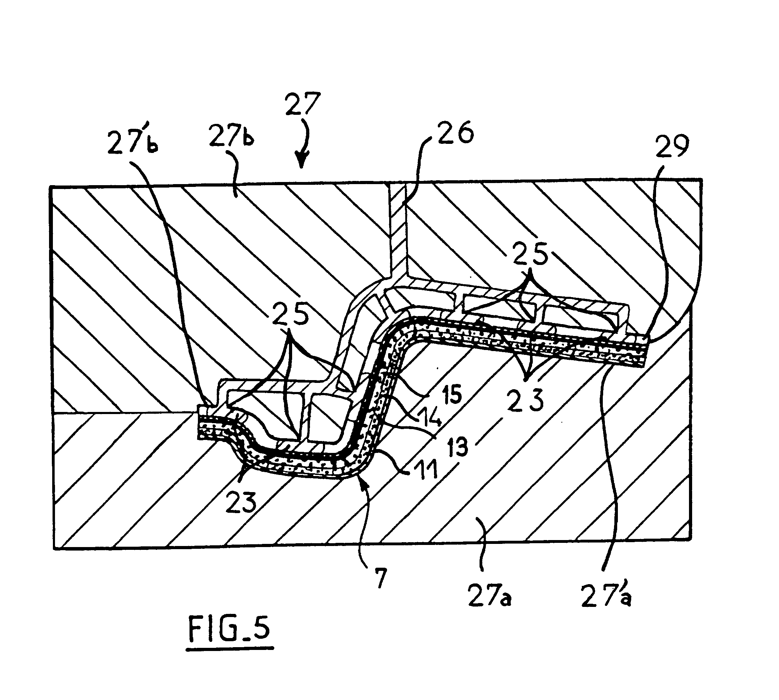

La figure 5 représente une variante de procédé. Le complexe 3 est disposé dans un moule d'injection 27 comprenant une cavité ménagée 29 entre une matrice 27a et un poinçon 27b.

La feuille de revêtement 11 vient en regard d'une surface 27'a de la matrice 27a.

Ici aussi, le complexe 7 peut être disposé sur un cadre pour son transfert vers le moule 27 et/ou pour son maintien (de préférence sous tension).

Le moule est ensuite fermé, ce qui provoque la mise en forme de la feuille de revêtement 11 et des sous-couches de mousse 13,14.

De la matière plastique destinée à constituer l'insert 3 est injectée sous basse pression (entre 40 et 120 bars) dans la cavité de moulage 29, entre la deuxième sous-couche de mousse 14, plus précisément la feuille d'accrochage formant ici barrière 15, et la surface 27'b, par l'intermédiaire d'une pluralité de buses 25 reliées à un canal d'injection 26.

La matière plastique 23 est injectée, avantageusement séquentiellement, par les buses 25 jusqu'à ce que la cavité de moulage 29 soit remplie de matière plastique.

La matière plastique injectée vient presser la deuxième sous-couche de mousse 14, poursuit la mise en forme du complexe 7 et vient s'y lier par l'intermédiaire de la barrière 15.

On pourra en fin d'injection exercer un effort de compression pour améliorer les qualités d'aspect de la pièce finie.

La pièce obtenue est ensuite démoulée après refroidissement.

Bien entendu, les réalisations qui viennent d'être décrites ne constituent que des exemples non limitatifs de réalisations conformes à l'invention.

Ainsi, l'insert 3 pourrait être inséré dans le moule 17 sous forme de plaque et être mis en forme lors de la fermeture du moule.

On pourrait également lier certaines ou l'ensemble des couches 11, 13, 14 composant le complexe 7, les unes aux autres, à l'intérieur du moule 17.

On pourrait utiliser plus d'une couche de mousse 13 à cellules ouvertes et/ou plus d'une couche de mousse à cellules fermées.

On pourrait également remplacer la feuille d'accrochage 15 et/ou la couche 5 par d'autres moyens réalisant la même fonction.

## Revendications

1. Elément (1) d'habillage intérieur de véhicule comprenant :
- un insert rigide (3) conférant à l'élément sa forme,
- une feuille de revêtement (11) en textile ou analogue recouvrant l'insert rigide,
- une couche de mousse (13, 14) disposée entre l'insert rigide et la feuille de revêtement, se subdivisant en une première et une deuxième sous-couches disposée respectivement entre la feuille de revêtement et la deuxième sous-couche, et entre l'insert et la première sous-couche,
**caractérisé en ce que** :
- la première sous-couche (13) présente principalement des cellules ouvertes, et
- la deuxième sous-couche (14) présente principalement des cellules fermées et est réalisée essentiellement en matériau(x) thermoplastique(s) polyoléfinique(s).

2. Elément d'habillage selon la revendication 1, **caractérisé en ce que** la première sous-couche de mousse (13) est réalisée essentiellement en polyuréthane.

3. Elément d'habillage selon l'une quelconque des revendications précédentes, **caractérisé en ce que** la première sous-couche de mousse présente une épaisseur comprise entre 1 millimètre et 3 millimètres d'épaisseur.

4. Procédé pour réaliser un élément d'habillage intérieur de véhicule, comprenant les étapes suivantes :
a) réaliser un complexe comprenant une feuille de revêtement (11), une première sous-couche de mousse (13) présentant principalement des cellules ouvertes et une deuxième sous-couche de mousse (14) présentant principalement des cellules fermées,
b) disposer dans un moule (17,27) la première sous-couche de mousse (13), entre la feuille de revêtement (11) et la deuxième sous-couche de mousse (14),
c) mettre en forme la feuille de revêtement, la première et la deuxième sous-couches de mousse par fermeture du moule,
d) lier la feuille de revêtement, la première et la deuxième sous-couches de mousse avec un insert rigide (3),
**caractérisé en ce que** l'on réalise lors de l'étape a) un complexe dont la deuxième sous-couche est essentiellement en matériau(x) thermoplastique(s) polyoléfinique(s).

5. Procédé selon la revendication 4, **caractérisé en ce que** pour réaliser les étapes b), c) et d), on réalise successivement les étapes suivantes :
- réaliser préalablement l'insert,
- disposer l'insert dans le moule (17) en regard de la deuxième sous-couche de mousse,
- presser la feuille de revêtement, la première sous-couche de mousse, la deuxième sous-couche de mousse et l'insert, afin de les mettre tous en forme et les lier ensemble.

6. Procédé selon la revendication 5, **caractérisé en ce que** l'on met l'insert sensiblement à sa forme définitive avant de le disposer dans le moule.

7. Procédé selon la revendication 4, **caractérisé en ce que** pour réaliser les étapes c) et d), on réalise successivement les étapes suivantes :
- disposer le complexe dans le moule (27),
- fermer au moins partiellement le moule,
- injecter de la matière plastique sous basse pression, en regard de la deuxième sous-couche de mousse, par l'intermédiaire d'une pluralité de buses (25).

8. Procédé selon l'une quelconque des revendications 4 à 7, **caractérisé en ce que** préalablement à l'étape c), on expose la deuxième sous-couche de mousse (14) à une source de chaleur (9) pour la ramollir.

9. Procédé selon l'une quelconque des revendications 4 à 8, **caractérisé en ce que** préalablement à l'étape b), on lie ensemble la feuille de revêtement, la première et la deuxième sous-couches de mousse.

10. Procédé selon l'une quelconque des revendications 4 à 9, **caractérisé en ce que** l'on réalise lors de l'étape a) un complexe dont la première sous-couche de mousse (13) est essentiellement en polyuréthane.

## Claims

1. Vehicle interior trim element (1) comprising:
- a rigid core member (3) which gives the element its shape,
- a cover sheet (11) made of fabric or similar which covers the rigid core member,
- a layer of foam (13, 14) arranged between the rigid core member and the cover sheet, sub-divided into a first and a second under-layer which are respectively arranged between the cover sheet and the second under-layer, and between the core member and the first under-layer,
**characterised in that**:
- the first under-layer (13) has mainly open cells, and
- the second under-layer (14) has mainly closed cells and is produced essentially from thermoplastic polyolefin material(s).

2. Trim element as claimed in claim 1, **characterised in that** the first foam under-layer (13) is produced essentially from polyurethane.

3. Trim element as claimed in either of the preceding claims, **characterised in that** the first foam under-layer has a thickness comprised between 1 millimetre and 3 millimetres.

4. Process for producing a vehicle interior trim element, comprising the following steps:
a) producing a structure comprising a cover sheet (11), a first foam under-layer (13) having mainly open cells, and a second foam under-layer (14) having mainly closed cells,
b) arranging the first foam under-layer (13) in a mould (17, 27), between the cover sheet (11) and the second foam under-layer (14),
c) shaping the cover sheet, the first and the second foam under-layers by closing the mould,
d) joining the cover sheet, the first and the second foam under-layers with a rigid core member (3),
**characterised in that** during step a) a structure is produced of which the second foam under-layer is essentially made of thermoplastic polyolefin material(s).

5. Process as claimed in claim 4, **characterised in that** in order to carry out steps b), c) and d), the following steps are carried out in turn:
- producing the core member beforehand,
- arranging the core member in the mould (17), facing the second foam under-layer,
- pressing on the cover sheet, the first foam under-layer, the second foam under-layer, and the core member, in order to shape them all and join them together.

6. Process as claimed in claim 5, **characterised in that** the core member is substantially given its final shape prior to arranging it in the mould.

7. Process as claimed in claim 4, **characterised in that** in order to carry out steps c) and d), the following steps are carried out in turn:
- arranging the structure in the mould (27),
- at least partially closing the mould,
- injecting plastic at low pressure against the second foam under-layer, via a plurality of nozzles (25).

8. Process as claimed in any of claims 4 to 7, **characterised in that** prior to step c), the second foam under-layer (14) is exposed to a source of heat (9) in order to soften it.

9. Process as claimed in any of claims 4 to 8, **characterised by** joining together the cover sheet, and the first and second foam under-layers, prior to step b).

10. Process as claimed in any of claims 4 to 9, **characterised in that** during step a) a structure is produced of which the first foam under-layer (13) is essentially made of polyurethane.

## Patentansprüche

1. Innenverkleidungsteil (1) für ein Kraftfahrzeug mit:
einem steifen Einsatz (3), der dem Teil seine Form verleiht,
einer Ummantelungsfolie (11) aus Textilfaser oder dergleichen, welche den steifen Einsatz bedeckt,
einer Schaumschicht (13, 14), die zwischen dem steifen Einsatz und der Ummantelungsfolie angeordnet ist, wobei sich die Schaumschicht in eine erste und eine zweite Unterschicht unterteilt, die jeweils zwischen der Ummantelungsfolie und der zweiten Unterschicht und zwischen dem Einsatz und der ersten Unterschicht angeordnet sind, **dadurch gekennzeichnet, daß**:
die erste Unterschicht (13) hauptsächlich offene Zellen aufweist und
die zweite Unterschicht (14) hauptsächlich geschlossene Zellen aufweist und im wesentlichen aus polyolefinischem, thermoplastischem Material(ien) realisiert ist.

2. Verkleidungsteil nach Anspruch 1, **dadurch gekennzeichnet, daß** die erste Schaumunterschicht (13) im wesentlichen aus Polyurethan realisiert ist.

3. Verkleidungsteil nach einem der vorhergehenden Ansprüche, **dadurch gekennzeichnet, daß** die erste Schaumunterschicht eine Dicke zwischen 1 Millimeter und 3 Millimetern aufweist.

4. Verfahren zur Herstellung eines Innenverkleidungsteils für ein Kraftfahrzeug mit den folgenden Schritten:
a) Herstellen eines Komplexes mit einer Ummantelungsfolie (11), einer ersten Schaumunterschicht (13), die im wesentlichen offene Zellen aufweist, und einerzweiten Schaumunterschicht (14), die im wesentlichen geschlossene Zellen aufweist,
b) Anordnen der ersten Schaumunterschicht (13) in der Spritzform (17, 27) zwischen der Ummantelungsfolie (11) und der zweiten Schaumunterschicht (14),
c) Informbringen der Ummantelungsfolie, der ersten und der zweiten Schaumunterschicht durch Schließen der Spritzform,
d) Verbinden der Ummantelungsfolie, der ersten und der zweiten Schaumunterschicht mit einem steifen Einsatz (3),
**dadurch gekennzeichnet, daß** man während des Schrittes a) einen Komplex herstellt, dessen zweite Unterschicht im wesentlichen aus polyolefinischem, thermoplastischem Material(ien) besteht.

5. Verfahren nach Anspruch 4, **dadurch gekennzeichnet, daß** man zur Durchführung der Schritte b), c) und d) nacheinander die folgenden Schritte durchführt:
zuerst Herstellen des Einsatzes,
Anordnen des Einsatzes in der Spritzform (17) gegenüber der zweiten Schaumunterschicht,
Pressen der Ummantelungsfolie, der ersten Schaumunterschicht, der zweiten Schaumunterschicht und des Einsatzes, um sie alle in Form zu bringen und sie miteinander zu verbinden.

6. Verfahren nach Anspruch 5, **dadurch gekennzeichnet, daß** man den Einsatz im wesentlichen in seine endgültige Form bringt, bevor man ihn in der Spritzform anordnet.

7. Verfahren nach Anspruch 4, **dadurch gekennzeichnet, daß** man zum Durchführen der Schritte c) und d) nacheinander die folgenden Schritte durchführt:
Anordnen des Komplexes in der Spritzform (27),
mindestens teilweises Schließen der Spritzform,
Einspritzen des Kunststoffmaterials bei niedrigem Druck gegenüber der zweiten Schaumunterschicht mittels einer Vielzahl von Spritzdüsen (25).

8. Verfahren nach einem der Ansprüche 4 bis 7, **dadurch gekennzeichnet, daß** man vor dem Schritt c) die zweite Schaumunterschicht (14) einer Wärmequelle (9) aussetzt, um sie zu erweichen.

9. Verfahren nach einem der Ansprüche 4 bis 8, **dadurch gekennzeichnet, daß** man vor dem Schritt b) die Umhüllungsfolie, die erste und die zweite Schaumunterschicht miteinander verbindet.

10. Verfahren nach einem der Ansprüche 4 bis 9,**dadurch gekennzeichnet, daß** man während des Schrittes a) einen Komplex herstellt, dessen erste Schaumunterschicht (13) im wesentlichen aus Polyurethan besteht.
